Europäisches Patentamt

European Patent Office

Office européen des brevets

(19)

(11) Publication number: **0 141 442**

**B1**

(12) **EUROPEAN PATENT SPECIFICATION**

(45) Date of publication of patent specification: **09.03.88**

(21) Application number: **84201275.9**

(22) Date of filing: **05.09.84**

(51) Int. Cl.⁴: **A 23 J 7/00, C 07 F 9/10**

(54) **Phosphate mixture and process for preparing such mixture.**

(30) Priority: **14.09.83 GB 8324672**

(43) Date of publication of application:
**15.05.85 Bulletin 85/20**

(45) Publication of the grant of the patent:
**09.03.88 Bulletin 88/10**

(84) Designated Contracting States:
**AT BE CH DE FR GB IT LI NL SE**

(56) References cited:
**EP-A-0 049 914**
**FR-A-2 343 481**
**US-A-3 357 918**

(73) Proprietor: **UNILEVER NV**
**Burgemeester s'Jacobplein 1 P.O. Box 760**
**NL-3000 DK Rotterdam (NL)**
㊴ **BE CH DE FR IT LI NL SE AT**

(73) Proprietor: **UNILEVER PLC**
**Unilever House Blackfriars P.O. Box 68**
**London EC4P 4BQ (GB)**
㊴ **GB**

(72) Inventor: **Rek, Johannes Henricus Maria**
**Coornhertstraat 96**
**NL-3132 GK Vlaardingen (NL)**
Inventor: **Rijsdijk, Adrianus**
**Wipperpark 19**
**NL-3141 RA Maassluis (NL)**
Inventor: **Dutilh, Christian Elie**
**Stooplaan 40**
**NL-3311 DM Dordrecht (NL)**

(74) Representative: **Mulder, Cornelis Willem Reinier,**
**Dr. et al**
**Postbus 137**
**NL-3130 AC Vlaardingen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a mixture that includes phosphatidylcholine and phosphatidylethanolamine in a weight ratio of at least 3:1 and to a process for the preparation of a mixture enriched in phosphatidylcholine.

Phosphatide mixtures are obtained as by-products in the refining of edible oils and are used, for instance, in foodstuffs such as margarine or chocolate, especially for their emulsifying properties.

The dry matter of such crude phosphatide mixtures (often referred to as crude or commercial lecithin) as obtained from the refining of, for instance, soyabean or rapeseed oil commonly comprises about 50—60% by weight of phosphatides, 30—40% of neutral triglycerides and 5—10% of sugars. The phosphatides usually consist mainly of phosphatidylcholine (henceforth called PC), phosphatidylethanolamine (PE), phosphatidylinositol (PI) and phosphatidic acid (PA). Dry, crude vegetable lecithin commonly comprises from about 8 to about 15% by weight of each of these components. Phosphatides that may occur in small amounts in crude lecithin are, e.g., hydrolysed phosphatides such as lyso-PE, lyso-PC or lyso-PA and phosphatidylserine.

For many applications, e.g. for use as emulsifier in margarines, the emulsifying properties of PC are adversely affected by PE. For such applications it is therefore advantageous to use a phosphatide mixture that is enriched in PC, rather than crude lecithin. Phosphatides compositions enriched in PC can also suitably be used for the preparation of pharmaceutical products, animal feedstuff and cosmetics.

Such a phosphatide mixture enriched in PC may be prepared by fractionating a crude phosphatide mixture. The enriched fraction obtained commonly contains PC and PE in a weight ratio of at least 3. Such phosphatide mixtures, however, can be plastic and therefore very difficult to handle.

In GB 1.113.241 a process is described for the preparation of a phosphatide mixture that includes PC and PE in a weight ratio of between 4 and 5.5 wherein crude lecithin is extracted with an 80 to 95% aqueous alkanol.

Preferably, from 1 to 5% by weight of soyabean oil fatty acid is added to the crude vegetable phosphatide before the extraction in order to reduce the viscosity of the phosphatide.

According to GB 1.215.386 a liquid product enriched in PC may be obtained by extracting crude lecithin with a lower alohol in the presence of from 5 to 30% of a liquid fatty acid monoglyceride.

A disadvantage of these ways to reduce the viscosity of the products enriched in PC is that the fatty acids or monoglycerides have to be present in substantial amounts, thereby correspondingly lowering the PC content of the products. Moreover, the presence of substantial amounts of fatty acids or monoglycerides may affect the product properties such as acidity and emulsifying behaviour which can be undesirable.

According to US 3.357.918 commercial lecithin normally includes from about 0.15% to about 0.35% by weight of di- and tri-valent metal ions and is plastic. The commercial lecithin may be fluidized by adding calcium, magnesium or aluminium ions in a quantity sufficient to provide a cation concentration of the order of about 0.4—0.6% of the lecithin as having 70% acetone insoluble matter.

The present invention provides, in a first aspect, a process for preparing a fluidized mixture enriched in phosphatidylcholine by fractionating a crude mixture containing a plurality of phosphatides including phosphatidylcholine to yield a fraction having a phosphatidylcholine content, calculated as % by weight of the total amount of phosphatides, which is increased relative to the phosphatidylcholine content of the crude mixture, characterized in that di- and/or trivalent metal ions are added to the fraction having an increased phosphatidylcholine content in an amount of not more than 0.50 wt.%, calculated on the dry matter thereof.

Preferably, the fractionation is carried out in a way such that the enriched fraction comprises phosphatidylcholine and phosphatidylethanolamine in a weight ratio in the range from 3:1 to 10:1.

According to a second aspect of the present invention there is provided a fluidized mixture that includes phosphatidylcholine and phosphatidylethanolamine in a weight ratio of at least 3:1 and 0.01—0.50% by weight of di- and/or trivalent metal ions.

Preferably, the fluidized mixture comprises phosphatidylcholine and phosphatidylethanolamine in a weight ratio in the range from 3 to 10.

For many applications, e.g. as an anti-spattering agent in margarine, it is desirable that the product enriched in PC comprises a substantial amount of triglycerides. It may therefore be desirable to add triglyceride oil.

Although the addition of oil can reduce the viscosity even at oil contents as high as 40% the viscosity of the products can still be so high that fluidizing agents have to be added. Phosphatide products including substantial amounts of triglyceride oil are often unstable. Upon storage, the product can demix, resulting in a layer of triglyceride oil and the highly viscous phosphatide mixture. The addition of fluidizing agents such as fatty acids or fatty acid monoglycerides does not prevent this demixing unless it is added in large quantities, e.g. about 10% or more, calculated as % by weight of the total phosphatides. If, however, di- or tri-valent metal ions are used as fluidizing agents, the tendency to demix can be overcome.

In preparing a product enriched in PC by fractionating commercial lecithin, the di- and tri-valent metal content is normally reduced from 0.15—0.35% by weight in the commercial lecithin to about 10—20 ppm in the enriched product.

# 0 141 442

The fluidized product can be obtained by raising the content of di- and tri-valent metal ions to about the level that normally occurs in plastic commercial lecithin. Raising the content of di- and tri-valent metal ions higher, i.e. above 0.35% by weight, normally does not substantially reduce the viscosity further. This does depend, however, to some extent on the composition of the product.

Fractionation of the crude mixture can be carried out in one of a number of ways. The product enriched in PC may be obtained from crude lecithin by chromatographically separating the mixture over a column having, e.g., silicon dioxide as the bed material and using eluting agents, at least one of which preferably comprises a substantial amount of lower alcohol, collecting the eluent enriched in PC and removing the solvent therefrom.

It may be obtained from a crude phosphatide mixture by selectively adsorbing this onto and desorbing it from a medium such as aluminium oxide in a batch process. Preferably, however, the product enriched in PC is prepared by extracting crude lecithin with a solvent containing mainly alkanol having from 1 to 3 carbon atoms. A suitable solvent is for example aqueous ethanol, e.g. the azeotropic mixture.

The extraction is preferably carried out in the following way:

A crude mixture that includes phosphatides is contacted with a solvent that preferably includes mainly alkanol having from 1 to 3 carbon atoms and up to 30 volume % of water. The mixture is vigorously stirred and then left to stand, preferably at a temperature not higher than 20°C, to allow the phases to settle. The liquid phase is separated off, e.g. by decanting and then preferably centrifuged to remove any undissolved matter. The solvent is then removed by evaporating, preferably at reduced pressure and a temperature not higher than 70°C.

Preferably the di- and/or tri-valent metal ions are added to the enriched fraction before the removal of the solvent therefrom. However, they may also be mixed with the enriched fraction after removing solvent therefrom.

By di- or tri-valent metal ions are meant metals in an oxidation state of 2 or 3 respectively. When the amount of the di- and/or tri-valent metal ions is given, the amount indicates only the amount of the metal ions as such, unless specifically indicated otherwise.

By adding di- and/or tri-valent metal ions to a substance is meant any way of contacting the metal ions with that substance.

Preferred di- or tri-valent metal ions are magnesium and calcium ions. The metal ions may for instance be added in the form of an aqueous slurry, but it is preferred to use soluble compounds as a source of di- or tri-valent metal ions. Calcium chloride is especially preferred. It can be particularly advantageous to add the metal ions dissolved in a solvent that contains mainly alcohol and/or water.

The amount of di- or tri-valent metal ions added is preferably at least 0.01% by weight, more preferably from 0.05 to 0.50% by weight calculated on the dry matter of the enriched fraction, an amount from 0.10 to 0.35% by weight being particularly preferred. By the weight of the dry matter of the enriched fraction is meant the weight of the composition that would be obtained if from the enriched fraction all water and, in case a solvent is used in the fractionation, all solvent would be removed.

It can be advantageous to add triglyceride oil. It is preferred to add the triglyceride oil to the enriched fraction. Preferably triglyceride oil is added in an amount such that the enriched fraction comprises from about 20 to about 50, more preferably from about 35 to about 45% of triglycerides calculated as % by weight of the dry matter of the enriched fraction. If a solvent is used in the fraction, it is preferred to mix the triglyceride oil with the enriched fraction before the solvent is removed therefrom, preferably together with the di and/or tri-valent metal ions.

The fluidized mixtures embodying the invention including PC and PE in a weight ratio of at least 3:1 and containing at least 0.01% by weight of di- and/or tri-valent metal ions can be easy to handle and can be readily mixed with for instance triglyceride oil to obtain a fat phase for the production of margarine.

Preferably the fluidized mixtures include from 0.10% to 0.35% by weight of di- and/or tri-valent metal ions, the metal ions preferably being calcium or magnesium ions or a mixture thereof. Preferably the fluidized mixture includes from about 20 to about 50%, more preferably from about 35 to about 45% by weight of triglyceride oil.

The amount of PC in the mixture is preferably at least 30% by weight, but may be substantially higher.

Example 1

1000 parts by weight of crude soyabean lecithin containing 14.5% PC, 12.0% PE, 8.7% PI, 8.5% PA and 35% oil were vigorously stirred with 3500 parts by weight of aqueous ethanol that contained 10 volume % of water. The mixture was then left to stand to allow the phases to separate. The alcoholic phase was extracted and subsequently centrifuged. The alcoholic phase contained 14% by weight of the crude lecithin starting material. The dry matter of the alcoholic phase included in % by weight, 45% PC, 7.5% PE, 5% PI, 15% triglyceride oil and 9% sugar.

The alcoholic phase was split into four equal parts which were labelled I—IV respectively. To each of the samples II—IV 15 parts by weight of soyabean oil were added. To sample III 2.5 parts by weight of soybean oil fatty acids were also added and to sample IV, 0.4 parts by weight of $CaCl_2$ dissolved in a minimal amount of water were added. Each sample was homogenized and then the solvent was removed by evaporation at reduced pressure. The viscosity of the products obtained decreased in the order I, II, III, IV; only product IV being pourable. The hardness of samples II and IV was determined with a Stevens

3

texturometer. This meter measures the weight needed to press a ring into the product. The weights needed were 15 g for sample II and 3 g for sample IV. Samples II, III and IV were then stored. After 1 day storage an oily layer had formed on sample II. Serious demixing had occurred in sample III after 1 week storage. After 1 year, sample IV was still homogeneous and transparent.

Example 2

1000 g of crude soyabean lecithin was extracted with aqueous ethanol as described in Example 1. The alcoholic phase obtained was split into 6 equal parts, labelled I—VI. To each sample soyabean oil was added until an oil content of 44.5% by weight calculated on dry matter was obtained. To samples II—VI varying quantities of $CaCl_2$ dissolved in a small amount of water were added. After stirring the samples, the solvent was removed by evaporation under reduced pressure. The moisture content of all samples was below 0.7% by weight. Subsequently the samples were stored for 1 week at room temperature. In sample 1, serious demixing had occurred, the sample having separated in an oily layer and a highly viscous intranslucent phosphatides mass. All samples II—VI were pourable. Of these samples the viscosities were measured. The results are given in Table 1. Subsequently, samples II—VI were stored again. After 200 days all samples were still homogeneous and transparent.

TABLE 1

| Sample | Ca-content (wt%) | Viscosity in Pa · s at 30°C |
|--------|------------------|------------------------------|
| II | 0.1 | 9 |
| III | 0.15 | 7 |
| IV | 0.2 | 5.5 |
| V | 0.3 | 3 |
| VI | 0.4 | 2 |

Similar results were obtained when the oil and $CaCl_2$ were admixed with the samples after the solvent had been removed therefrom. To obtain a homogeneous mixture of the plastic, desolventised enriched fraction, the Ca-solution and the oil, the composition was stirred with a high speed mixer during 5 minutes at 50°C. Subsequently the samples were dried again to reduce the moisture content to below 0.7%.

Especially when larger quantities were to be handled, homogeneous mixtures could more conveniently be prepared if the oil and $CaCl_2$-solution were added to the alcohol phase before the removal of the solvent.

Example 3

Crude soyabean lecithin was extracted with aqueous ethanol as described in Example 1.

The alcoholic phase obtained was split into 12 equal parts, labelled I—XII. To these samples varying quantities of sunflower oil and $CaCl_2$ dissolved in a small amount of water were added. After stirring the solvent was removed and the viscosities of the samples were measured. Subsequently the samples were stored at room temperature for 2 weeks. The results are shown in Table 2.

4

# 0 141 442

TABLE 2

| Sample | Ca-content (wt%) | Oil-content (wt%) | Viscosity at 30°C (Pa · s) | Stable after 2 weeks ? |
|---|---|---|---|---|
| I* | — | 40 | ≫50 | no |
| II | 0.2 | 40 | 30 | yes |
| III | 0.3 | 40 | 18 | yes |
| IV | 0.4 | 40 | 12 | yes |
| V* | — | 42 | ≫50 | no |
| VI | 0.2 | 42 | 13 | yes |
| VII | 0.3 | 42 | 8 | yes |
| VIII | 0.4 | 42 | 5 | yes |
| IX* | — | 44 | ≫50 | no |
| X | 0.2 | 44 | 7 | yes |
| XI | 0.3 | 44 | 3.5 | yes |
| XII | 0.4 | 44 | 2.5 | yes |

*The viscosities of these samples was too high to measure (much higher than 50 Pa · s). Upon storage phase separation occurred in these samples yielding an oily layer and a plastic intranslucent mass in which apparently crystallisation of phosphatides had taken place.

Example 4

Crude soyabean lecithin was extracted with aqueous ethanol as described in Example 1. The alcohol phase was divided in a large number of samples and it was determined which amounts of soyabean oil had to be added to obtain stable products enriched in PC (after removal of solvent) having a viscosity of 10 Pa · s at 30°C, at a preset Ca-content.

The results are shown in Table 3.

TABLE 3

| Ca-content (wt%) | Oil content required to obtain stable product with $\eta = 10$ Pa · s at 30°C |
|---|---|
| 0 | —* |
| 0.1 | 44.3 |
| 0.15 | 43.3 |
| 0.2 | 42.5 |
| 0.3 | 41.4 |
| 0.4 | 40.5 |

*No stable product could be obtained.

Example 5

1 kg of crude rapeseed lecithin, comprising 11 wt.% PC, 10 wt.% PE, 8.3 wt.% PI, 9.8 wt.% PA and 40 wt.% triglycerides was extracted with 4 kg of 90% aqueous ethanol. The alcoholic phase obtained

5

comprised 41% PC, 6.8% PE, 5.1% PI, 1.2% PA, 16.3% triglycerides and 10.5% sugars, calculated as % by weight on the dry matter of the alcoholic phase. An aqueous solution of $MgSO_4$ was admixed with the alcoholic phase in an amount of 0.25 wt.% calculated as Mg on the dry contents of the alcoholic phase. Subsequently, the solvent was evaporated under reduced pressure and refined rapeseed oil was mixed with the dry composition obtained until the oil content was 41 wt.%. A transparent phosphatides composition was obtained having a viscosity of 11 Pa · s at 30°C. No changes were observed after storing the phosphatide composition for four months.

Similar results were obtained when the oil was added to the alcoholic phase before removing the solvent therefrom and when the $MgSO_4$ was admixed with the alcoholic phase in the dry state or with a small amount of aqueous ethanol, instead of as an aqueous solution.

Example 6

100 g crude soyabean lecithin, containing 15 wt.% PC, 13 wt.% PE, 11 wt.% PI, 10 wt.% PA and 35 wt.% triglycerides, were admixed with 300 g hexane and 100 g isopropanol. Subsequently, 20 g activated neutral aluminum oxide were added and the mixture was stirred for 15 minutes at 30°C. The mixture was then filtered. The liquid phase obtained contained 22% PC, 7% PE, 3% PI, 2% PA and 47% triglycerides calculated as % by weight on the dry matter of the liquid phase. The liquid phase was split into two equal parts. To one part 0.2% $CaCl_2$ calculated as wt.% Ca on dry matter, dissolved in a small amount of water, was added. From both samples the solvent was then removed by evaporation. After 6 weeks storage, demixing had occurred in the sample to which no $CaCl_2$ had been added, whereas the sample with the added $CaCl_2$ was homogeneous, transparent and easily pourable.

Example 7

1.5 kg crude soyabean oil was extracted with 4.5 kg of 90% aqueous ethanol. After removal of the undissolved matter, a sample of 500 ml of the alcoholic phase was analyzed. After evaporation of the solvent 22.8 g dry matter was obtained, which contained 46 wt.% PC, 7.3 wt.% PE and 15 wt.% triglycerides. Several substances were admixed with samples of 500 ml alcoholic phase each, as follows:

sample 1: none
sample 2: 20 wt.% (4.6 g) of refined soyabean oil (SB)
sample 3: 20 wt.% SB+5 wt.% oleic acid
sample 4: 20 wt.% SB+5 wt.% of a sunflower monoglyceride composition that contained 95 wt.% of monoglycerides
sample 5: 20 wt.% SB+0.25 wt.% Ca (as $CaCl_2$)
sample 6: 20 wt.% SB+0.25 wt.% Mg (as $MgCl_2$)
sample 7: 20 wt.% SB+0.5 wt.% K (as KCl)

Subsequently, the solvent was removed from all samples. The amount of dry matter obtained and the PC and PE contents and the total content of triglycerides, oleic acid and monoglycerides of the samples are given in Table 4.

TABLE 4

| Sample | Dry matter (g) | Tri-+monoglycerides +oleic acid (wt%) | PC (wt%) | PE (wt%) |
|--------|--------|--------|--------|--------|
| 1 | 22.8 | 15 | 46.0 | 7.3 |
| 2 | 27.4 | 29 | 38.3 | 6.1 |
| 3 | 28.5 | 32 | 36.8 | 5.8 |
| 4 | 28.5 | 32 | 36.8 | 5.8 |
| 5 | 27.5 | 29 | 38.1 | 6.0 |
| 6 | 27.6 | 29 | 38.0 | 6.0 |
| 7 | 27.6 | 29 | 38.0 | 6.0 |

sample 1 was plastic
sample 2 was highly viscous and turbid. After 1 day storage demixing had occurred.
sample 7 was even more viscous and turbid than sample 2
samples 3 and 4 were initially pourable and transparent.
After 1 month storage, however, demixing occurred samples 5 and 6 were pourable and transparent.
After 1 year storage, the samples were still homogeneous and no changes were observed.

Example 8

Crude soyabean lecithin was extracted with a 3-fold amount of 95% aqueous methanol. The undissolved matter was removed and 0.2 wt.% $Al^{3+}$ (as $AlCl_3$) and 20 wt.% sunflower oil were mixed with the PC-enriched fraction. After removal of the solvent therefrom, a homogeneous pourable PC-enriched phosphatides composition was obtained.

## Claims

1. A process for preparing a fluidized mixture enriched in phosphatidylcholine by fractionating a crude mixture containing a plurality of phosphatides including phosphatidylcholine to yield a fraction having a phosphatidylcholine content, calculated as % by weight of the total amount of phosphatides, which is increased relative to the phosphatidylcholine content of the crude mixture, characterized in that di- and/or trivalent metal ions are added to the fraction having an increased phosphatidylcholine content in an amount of not more than 0.50 wt.%, calculated on the dry matter thereof.

2. A process according to claim 1, wherein the crude mixture is fractionated with the use of a solvent.

3. A process according to claim 2, wherein the solvent includes alkanol having from 1 to 3 carbon atoms.

4. A process according to claim 2 or claim 3 wherein the said metal ions are added to the enriched fraction before removing solvent therefrom.

5. A process according to any one of claims 1—4, wherein the said metal ions include calcium or magnesium ions.

6. A process according to any one of claims 1—5 wherein the metal ions are in the form of compounds soluble in water, alcohol or mixtures thereof.

7. A process according to claim 6, wherein the metal ions are dissolved in a solvent that includes alkanol or water.

8. A process according to claim 7, wherein the metal ions are in the form of an aqueous solution of calcium chloride.

9. A process according to any one of claims 1—8 wherein the metal ions are added in an amount of at least 0.01% by weight calculated on the dry matter of the enriched fraction.

10. A process according to claim 9 wherein the metal ions are added in an amount of 0.10—0.35% by weight calculated on the dry matter of the enriched fraction.

11. A process according to any one of claims 1—10 wherein triglyceride oil is added, preferably to the enriched fraction.

12. A process according to claim 11 wherein the triglyceride oil is added in an amount such that the enriched fraction comprises from about 20 to about 50, preferably from about 35 to about 45% of triglycerides calculated as % by weight of the dry matter of the enriched fraction.

13. A process according to claim 11 or claim 12 wherein the triglyceride oil is added to the enriched fraction before removing solvent therefrom.

14. A process according to any one of claims 1—13 wherein the fractionation is carried out in a way such that the enriched fraction includes phosphatidylcholine and phosphatidylethanolamine in a weight ratio in the range from 3:1 to 10:1.

15. A fluidized mixture that includes phosphatidylcholine and phosphatidylethanolamine in a weight ratio of at least 3:1 and 0.01 to 0.50% by weight of di- and/or trivalent metal ions.

16. A mixture according to claim 15 that includes 0.05—0.50, preferably 0.10—0.35% by weight of di- and/or trivalent metal ions.

17. A mixture according to claim 15 or claim 16 wherein the metal ions are calcium or magnesium ions or a mixture thereof.

18. A mixture according to any one of claims 15—17 that includes at least 30% by weight of phosphatidylcholine.

19. A mixture according to any one of claims 15—18 that further includes from about 20% to about 50% preferably from about 35% to about 45% by weight of triglyceride oil.

20. A mixture according to any one of claims 15—19 that includes phosphatidylcholine and phosphatidylethanolamine in a weight ratio in the range from 3:1 to 10:1.

## Patentansprüche

1. Verfahren zur Herstellung einer an Phosphatidylcholin angereicherten, verflüssigten Mischung durch Fraktionieren einer rohen Mischung, die eine Vielzahl von Phosphatiden, einschließlich Phosphatidylcholin, enthält, um eine Fraktion zu erhalten, die einen Phosphatidylcholin-Gehalt, berechnet als Gew.-% der Gesamtmenge der Phosphatide, aufweist, der im Hinblick auf den Phosphatidylcholin-Gehalt der rohen Mischung angehoben ist, dadurch gekennzeichnet, daß zu der Fraktion angehobenen Phosphatidylcholin-Gehalts 2- und/oder 3-wertige Metallionen in einer Menge von nicht mehr als 0,50 Gew.-%, bezogen auf die Trockensubstanz davon, gegeben werden.

2. Verfahren nach Anspruch 1, dadurch gekennzeichnet, daß die rohe Mischung unter Verwendung eines Lösungsmittels fraktioniert wird.

7

3. Verfahren nach Anspruch 2, dadurch gekennzeichnet, daß das Lösungsmittel ein Alkanol mit 1 bis 3 Kohlenstoffatomen umfaßt.

4. Verfahren nach Anspruch 2 oder 3, dadurch gekennzeichnet, daß die Metallionen zu der angereicherten Fraktion gegeben werden, bevor daraus das Lösungsmittel entfernt worden ist.

5. Verfahren nach irgendeinem der Ansprüche 1 bis 4, dadurch gekennzeichnet, daß die Metallionen Kalzium- oder Magnesiumionen umfassen.

6. Verfahren nach irgendeinem der Ansprüche 1 bis 5, dadurch gekennzeichnet, daß die Metallionen in Form von Verbindungen vorliegen, die in Wasser, Alkohol oder Mischungen davon löslich sind.

7. Verfahren nach Anspruch 6, dadurch gekennzeichnet, daß die Metallionen in einem Lösungsmittel gelöst sind, das ein Alkanol oder Wasser umfaßt.

8. Verfahren nach Anspruch 7, dadurch gekennzeichnet, daß die Metallionen in Form einer wäßrigen Lösung von Kalziumchlorid vorliegen.

9. Verfahren nach irgendeinem der Ansprüche 1 bis 8, dadurch gekennzeichnet, daß die Metallionen in einer Menge von mindestens 0,01 Gew.-%, bezogen auf die Trockensubstanz der angereicherten Fraktion, hinzugegeben werden.

10. Verfahren nach Anspruch 9, dadurch gekennzeichnet, daß die Metallionen in einer Menge von 0,10 bis 0,35 Gew.-% bezogen auf die Trockensubstanz der angereicherten Fraktion, hinzugegeben werden.

11. Verfahren nach irgendeinem der Ansprüche 1 bis 10, dadurch gekennzeichnet, daß ein Triglyceridöl hinzugegeben wird, vorzugsweise zu der angereicherten Fraktion.

12. Verfahren nach Anspruch 11, dadurch gekennzeichnet, daß das Triglyceridöl in einer solchen Menge hinzugegeben wird, daß die angereicherte Fraktion etwa 20 bis 50, vorzugsweise etwa 35 bis 45 Gew.-% Triglyceride, berechnet als Gew.-% der Trockensubstanz der angereicherten Fraktion, enthält.

13. Verfahren nach Anspruch 11 oder 12, dadurch gekennzeichnet, daß das Triglyceridöl zu der angereicherten Fraktion gegeben wird, bevor daraus das Lösungsmittel entfernt worden ist.

14. Verfahren nach irgendeinem der Ansprüche 1 bis 13, dadurch gekennzeichnet, daß die Fraktionierung in einer solchen Weise durchgeführt wird, daß die angereicherte Fraktion Phosphatidylcholin und Phosphatidylethanolamin in einem Gewichtsverhältnis von 3:1 bis 10:1 umfaßt.

15. Verflüssigte Mischung, die Phosphatidylcholin und Phosphatidylethanolamin in einem Gewichtsverhältnis von mindestens 3:1 und 0,01 bis 0,50 Gew.-% 2- und/oder 3-wertige Metallionen umfaßt.

16. Mischung nach Anspruch 15, die 0,05 bis 0,50, vorzugsweise 0,10 bis 0,35 Gew.-% 2- und/oder 3-wertige Metallionen umfaßt.

17. Mischung nach Anspruch 15 oder 16, dadurch gekennzeichnet, daß die Metallionen Kalzium- oder Magnesiumionen oder eine Mischung davon darstellen.

18. Mischung nach irgendeinem der Ansprüche 15 bis 17, die mindestens 30 Gew.-% Phosphatidylcholin umfaßt.

19. Mischung nach irgendeinem der Ansprüche 15 bis 18, die des weiteren etwa 20 bis 50, vorzugsweise etwa 35 bis 45 Gew.-% Triglyceridöl umfaßt.

20. Mischung nach irgendeinem der Ansprüche 15 bis 19, die Phosphatidylcholin und Phosphatidylethanolamin in einem Gewichtsverhältnis von 3:1 bis 10:1 umfaßt.

**Revendications**

1. Procédé de préparation d'un mélange fluidifié enrichi en phosphatidylcholine par fractionnement d'un mélange brut contenant une pluralité de phosphatides y compris de la phosphatidylcholine pour donner une fraction ayant une teneur en phosphatidylcholine, calculée en % en poids de la quantité totale de phosphatides, qui est augmentée par rapport à la teneur en phosphatidylcholine du mélange brut, caractérisé en ce qu'on ajoute des ions de métal di- et/ou trivalent à la fraction ayant une teneur accrue en phosphatidylcholine, en une quantité ne dépassant pas 0,50% en poids, calculée par rapport à son extrait sec.

2. Procédé selon la revendication 1, dans lequel le mélange brut est fractionné en utilisant un solvant.

3. Procédé selon la revendication 2, dans lequel le solvant comprend un alcanol ayant de 1 à 3 atomes de carbone.

4. Procédé selon la revendication 2 ou la revendication 3 dans lequel lesdits ions métalliques sont ajoutés à la fraction enrichie avant de lui enlever le solvant.

5. Procédé selon l'une quelconque des revendications 1 à 4 dans lequel lesdits ions métalliques comprennent des ions calcium ou magnésium.

6. Procédé selon l'une quelconque des revendications 1 à 5 dans lequel les ions métalliques sont sous forme de composés solubles dans l'eau, l'alcool ou leurs mélanges.

7. Procédé selon la revendication 6, dans lequel les ions métalliques sont dissous dans un solvant qui comprend un alcanol ou l'eau.

8. Procédé selon la revendication 7 dans lequel les ions métalliques sont sous forme d'une solution aqueuse ou de chlorure de calcium.

9. Procédé selon l'une quelconque des revendications 1—8 dans lequel les ions métalliques sont ajoutés en une quantité d'au moins 0,01% en poids calculée par rapport à l'extrait sec de la fraction enrichie.

10. Procédé selon la revendication 9 dans lequel les ions métalliques sont ajoutés en une quantité de 0,10—0,35% en poids calculée par rapport à l'extrait sec de la fraction enrichie.

11. Procédé selon l'une quelconque des revendications 1 à 10 dans lequel de l'huile triglycéride est ajoutée, de préférence à la fraction enrichie.

12. Procédé selon la revendication 11 dans lequel l'huile triglycéride est ajoutée en une quantité telle que la fraction enrichie comprend d'environ 20 à environ 50, de préférence d'environ 35 à environ 45% de triglycérides calculé en % en poids de l'extrait sec de la fraction enrichie.

13. Procédé selon la revendication 11 ou la revendication 12 dans lequel l'huile triglycéride est ajoutée à la fraction enrichie avant de lui enlever le solvant.

14. Procédé selon l'une quelconque des revendications 1 à 13 dans lequel le fractionnement est réalisé de telle manière que la fraction enrichie comprend de la phosphatidylcholine et de la phosphatidyléthanolamine dans un rapport pondéral compris dans l'intervalle de 3:1 et 10:1.

15. Mélange fluidifié qui comprend de la phosphatidylcholine et de la phosphatidyléthanolamine en rapport pondéral d'au moins 3:1 et 0,01 à 0,50% en poids d'ions métalliques di- et/ou trivalents.

16. Mélange selon la revendication 15 qui comprend 0,05—0,50, de préférence 0,10—0,35% en poids d'ions métalliques di- et/ou trivalents.

17. Mélange selon la revendication 15 ou la revendication 16 dans lesquels les ions métalliques sont des ions calcium ou magnésium ou un de leurs mélanges.

18. Mélange selon l'une quelconque des revendications 15 à 17 qui comprend au moins 30% en poids de phosphatidylcholine.

19. Mélange selon l'une quelconque des revendications 15 à 18 qui comprend en plus d'environ 20% à environ 50% de préférence d'environ 35% à environ 45% en poids d'huile triglycéride.

20. Mélange selon l'une quelconque des revendications 15 à 19 qui comprend de la phosphatidylcholine et de la phosphatidyléthanolamine dans un rapport pondéral compris dans l'intervalle de 3:1 à 10:1.